# EUROPEAN PATENT APPLICATION

(11) **EP 4 468 452 A1**
(43) Date of publication of application: **27.11.2024**
(21) Application number: 22948209.6
(22) Date of filing: 27.06.2022
(51) Int. Cl.: H01M 10/613, H01M 10/655

(54) **THERMAL MANAGEMENT DEVICE, BATTERY, AND ELECTRICAL DEVICE**

(71) Applicant: Contemporary Amperex Technology Co., Limited, Ningde, Fujian 352100 (CN)
(72) Inventor: HU, Lijun, Ningde, Fujian 352100 (CN); HOU, Yuepan, Ningde, Fujian 352100 (CN)
(74) Representative: Gong, Jinping
(86) International application number: PCT/CN2022/101392
(87) International publication number: WO 2024/000084

(57) **Abstract**

The present application discloses a thermal management device, a battery, and a power consuming device. The thermal management device according to an embodiment of the present application comprises: a heat exchange body comprising a top wall and a bottom wall that are arranged opposite each other in its own thickness direction, and a receiving cavity located between the top wall and the bottom wall, the receiving cavity being configured to receive a heat exchange medium, wherein in the thickness direction, one or each of the top wall and the bottom wall is recessed in a direction approaching the other to form a recessed cavity, and the recessed cavity is configured to provide an expansion space for a battery cell. The thermal management device according to the embodiment of the present application can absorb a squeezing stress and maintain a cooling effect.

## Description

### Technical Field

The present application relates to the field of batteries, and in particular, to a thermal management device, a battery, and a power consuming device.

### Background Art

In the existing vehicle industry, electric vehicles have become an important part of the sustainable development of the vehicle industry because of their own advantages of energy saving and environmental protection. In each electric vehicle, a battery as a power source of the vehicle is one of the important factors that determine the performance of the vehicle, that is, the battery technology is an important factor related to the development of electric vehicles.

In some cases, a plurality of battery cells forming a battery module may generate a lot of heat during rapid charge and discharge. In this case, in order to ensure normal operation of the battery module, it is necessary to arrange a thermal management device around the module to ensure that the temperature of the battery cells is within a normal operation range. In some cases, the thermal management device is likely to be squeezed by the battery cells, resulting increased flow resistance and reduced heat exchange efficiency.

Therefore, there is an urgent need for a thermal management device that can absorb an expansion stress of a battery and a corresponding battery and power consuming device.

### Summary of the Invention

The present application provides a thermal management device, a battery, and a power consuming device, wherein the thermal management device can provide an expansion space for expansion of a battery cell, and is less likely to be squeezed by the battery cell which results in increased flow resistance, thereby having a high heat exchange efficiency.

In a first aspect, the present application provides a thermal management device for exchanging heat with a battery cell. The thermal management device comprises a heat exchange body comprising a top wall and a bottom wall that are arranged opposite each other in its own thickness direction, and a receiving cavity located between the top wall and the bottom wall, the receiving cavity being configured to receive a heat exchange medium, wherein in the thickness direction, one or each of the top wall and the bottom wall is recessed in a direction approaching the other to form a recessed cavity, and the recessed cavity is configured to provide an expansion space for a battery cell.

The thermal management device according to embodiments of the present application has the recessed cavity in its own thickness direction, and the space provided by the recessed cavity can absorb expansion of a battery cell to be cooled during use. This avoids the compression of the receiving cavity inside the heat exchange body due to the battery cell squeezing the top wall or the bottom wall during the expansion, so that the thermal management device is less likely to be squeezed by a battery which results in increased flow resistance, thereby ensuring parameters such as a flow rate of the heat exchange medium in the receiving cavity. Furthermore, after thermally expanding, the battery cell enters a recess of the heat exchange body to come into contact with the heat exchange body for heat exchange with the heat exchange medium in the heat exchange body, thereby ensuring a heat exchange rate.

According to an aspect of the embodiment of the present application, in the thickness direction, one or each of the top wall and the bottom wall is an arc-shaped plate recessed in the direction approaching the other. The arc-shaped plate enables the thermal management device to be more easily attached to a surface of the battery cell to be cooled.

According to an aspect of the embodiment of the present application, in the thickness direction, the top wall and the bottom wall are respectively arc-shaped plates recessed in directions approaching each other. Configuring both the top wall and the bottom wall as the arc-shaped plates enables the thermal management device to be arranged between two adjacent battery cells, to absorb the expansion on two sides respectively.

According to an aspect of the embodiment of the present application, in the thickness direction, the top wall and the bottom wall are spaced apart from each other and symmetrically distributed. Symmetrical arrangement enables the entire thermal management device to be stressed uniformly and facilitates processing.

According to an aspect of the embodiment of the present application, in a first direction, the heat exchange body has a first region and a second region, a distance between the top wall and the bottom wall in the first region in the thickness direction is less than that in the second region in the thickness direction, and the first direction intersects with the thickness direction. The heat exchange body itself may have different thicknesses in the first direction intersecting with the thickness direction, so as to adjust the position of the recess accordingly.

According to an aspect of the embodiment of the present application, second regions are respectively provided on two sides of the first region in the first direction. The heat exchange body may have a thin region and thick regions located on two sides of the thin region in the first direction, to match the expansion of the battery cell by means of a thickness change.

According to an aspect of the embodiment of the present application, in the first direction, the distance between the top wall and the bottom wall in the thickness direction first decreases and then increases. The overall thickness of the heat exchange body may have a trend of first decreasing and then increasing, so as to match the expansion of the battery cell and better absorb the expansion.

According to an aspect of the embodiment of the present application, the heat exchange body further comprises a first side wall and a second side wall that are arranged opposite to each other in the first direction, the first side wall is connected to the top wall and the bottom wall, the second side wall is connected to the top wall and the bottom wall, and in the first direction, one or each of the first side wall and the second side wall is recessed in a direction away from the other. The receiving cavity of the heat exchange body may be enclosed by the top wall, the first side wall and the second side wall, wherein one or each of the first side wall and the second side wall that is recessed in a direction away from the other can increase a cross-sectional area of the receiving cavity to improve the heat exchange efficiency.

According to an aspect of the embodiment of the present application, in the first direction, the first side wall and the second side wall are respectively arc-shaped plates that are recessed in directions away from each other. Configuring both the first side wall and the second side wall as the arc-shaped plates recessed in directions away from each other can further enlarge the cross-sectional area of the receiving cavity while having the same thickness.

According to an aspect of the embodiment of the present application, in the first direction, the heat exchange body is of an axisymmetric structure. The heat exchange body with the axisymmetric structure facilitates design and processing, and is stressed uniformly.

According to an aspect of the embodiment of the present application, the thermal management device further comprises a support component, and the support component is arranged in the receiving cavity and is configured to support at least one of the top wall and the bottom wall. The support component can maintain a certain distance between the top wall and the bottom wall, thereby facilitating circulation of the heat exchange medium.

According to an aspect of the embodiment of the present application, the support component comprises a plurality of support units, the plurality of support units are distributed spaced apart from each other and separate the receiving cavity to form a plurality of flow channels, and each of the support units is connected to at least one of the top wall and the bottom wall. The support units can provide a certain support for the top wall and the bottom wall of the heat exchange body, to maintain the circulation of the internal flow channels.

According to an aspect of the embodiment of the present application, the plurality of support units are spaced apart from each other and arranged in parallel. The support units arranged in parallel make the thermal management device have a uniform bearing capacity in a distribution direction of the support units.

According to an aspect of the embodiment of the present application, the support units each are of a plate-like structure, and an included angle between at least one of the support units and at least one of the top wall and the bottom wall is less than 90°. The support units with an included angle of less than 90°, that is, obliquely arranged, can provide a space for further compression when the heat exchange body is squeezed in the thickness direction, so as to avoid damage to the battery cells.

According to an aspect of the embodiment of the present application, an included angle between each of the support units and the top wall ranges from 30° to 60°; and/or an included angle between each of the support units and the bottom wall ranges from 30° to 60°. Keeping the intersection angle between each of the support units and the top wall or the bottom wall in an appropriate range can make the support unit have an appropriate shrinkage deformation allowance.

According to an aspect of the embodiment of the present application, every adjacent two of the plurality of support units have the same distance in the first direction, and the first direction intersects with the thickness direction. The support units may be equally spaced apart from each other to provide uniform support for the heat exchange body.

According to an aspect of the embodiment of the present application, the heat exchange body and the support component are of an integral structure. The integral molding of the heat exchange body and the support component can improve the overall production efficiency of the thermal management device.

In a second aspect, the present application provides a battery, comprising: a plurality of battery cells and a thermal management device according to any one of the embodiments of the first aspect, wherein at least a part of the thermal management device is located between adjacent battery cells and is configured to exchange heat with the battery cells, and the recessed cavity is configured to provide an expansion space for the battery cells.

According to a third aspect, the present application provides a power consuming device, comprising a battery according to any one of the embodiments of the second aspect, wherein the battery is configured to supply electric energy.

The thermal management device according to the embodiments of the present application has the recessed cavity, which can provide a space allowance for the expansion of the battery cells and the grouping tolerance when batteries are arranged in groups during use, avoid damage to the battery cells, and keep the thermal management device in contact with the battery cells to improve the cooling effect.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
FIG. 1 is a schematic structural diagram of a vehicle according to some embodiments of the present application;
FIG. 2 is a schematic structural diagram of a battery according to some embodiments of the present application;
FIG. 3 is an exploded view of the battery shown in FIG. 2;
FIG. 4 is an exploded view of a battery according to some other embodiments of the present application;
FIG. 5 is a diagram of a thermal management device according to some embodiments of the present application in a use state;
FIG. 6 is a schematic structural diagram of a thermal management device according to some embodiments of the present application;
FIG. 7 is a partial structural diagram of a thermal management device according to some embodiments of the present application; and
FIG. 8 is a sectional view of a thermal management device according to some embodiments of the present application.

### Reference signs:

1000 - Vehicle; 2000 - Battery; 3000 - Controller; 4000 - Motor;
100- Thermal management device; 200 - Battery cell; 300 - Housing;
10 - Heat exchange body; 20 - Support component;
11 - Top wall; 12 - Bottom wall; 13 - Receiving cavity; 14 - First region; 15 - Second region; 16 - First side wall; 17 - Second side wall; 18 - Inlet; 19 - Outlet; 21 - Support unit;
X - Thickness direction; Y - First direction.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

In the existing field of batteries, traction batteries have a gradually increasing application scale, and are widely used in energy storage systems of power stations, power sources of vehicles and even aerospace machinery, and other fields. Therefore, the demand for traction batteries in the market is gradually increasing. In order to achieve a certain output power or output voltage, an existing battery is usually composed of a plurality of battery cells connected in series or in parallel, and these battery cells may generate heat and expand during charging and discharging, so it is usually necessary to arrange a thermal management device outside the battery cells to enable the battery to be kept in a normal operation temperature range.

The applicant has noticed that in some cases, a thermal management device adopted for the battery is a hollow cooling plate, and heat exchange is performed by filling a flowing cooling medium inside the cooling plate. On this basis, the battery cells usually expand during operation, and an expansion degree of a surface of the battery cell is usually positively related to a surface area of the battery. Therefore, in order to avoid the influence of expansion and squeezing, the existing cooling plate is usually arranged at a bottom surface or side surface of the rectangular battery cell that has a relatively small area, but the heat exchange efficiency is relatively low. If arranged near a side surface having a relatively large area, the cooling plate is correspondingly likely to be squeezed due to expansion of the battery. In some cases, the cooling plate has a flat and straight surface and cannot be easily compressed in its own thickness direction, so that the cooling plate cannot absorb the grouping tolerance and an expansion allowance of the battery cells.

Based on the above considerations, in order to solve the problem that a thermal management device cannot absorb an expansion force of a battery when being squeezed due to the expansion of the battery, the applicant proposes a thermal management device, comprising a heat exchange body. One or each of a top wall and a bottom wall of the heat exchange body, which are arranged opposite each other in a thickness direction of the heat exchange body, is recessed in a direction approaching the other to form a recessed cavity, the recessed cavity absorbs the grouping tolerance generated between the battery cells and the heat exchange body during battery assembly, and the recessed cavity can absorb the expansion of the battery cells during operation. When expanding, the battery cells can extend into the recessed cavity to exchange heat with the heat exchange body, thereby ensuring a good heat exchange efficiency.

The technical solutions described in the embodiments of the present application are applicable to a battery and a power consuming device using the battery.

The power consuming device may be a vehicle, a mobile phone, a portable apparatus, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

It can be understood that the battery disclosed in the embodiments of the present application may be used in, but not limited to, the aforementioned power consuming device such as a vehicle, a ship or an aircraft. A power supply system of the power consuming device may be formed by using the thermal management device and the battery disclosed in the present application, so that the stability and the good heat exchange efficiency of the structure can still be maintained after the battery cells expand. On this basis, the following embodiments of the present application and the accompanying drawings are described by taking an example in which the thermal management device is arranged on a side surface of a battery cell, but it should be understood that the present application is not limited thereto. The thermal management device according to the embodiments of the present application may also be applied to a scenario where other components to be cooled may expand, which is also within the scope of protection.

For ease of description, an example in which a power consuming device refers to a vehicle is used for description in the following embodiments.

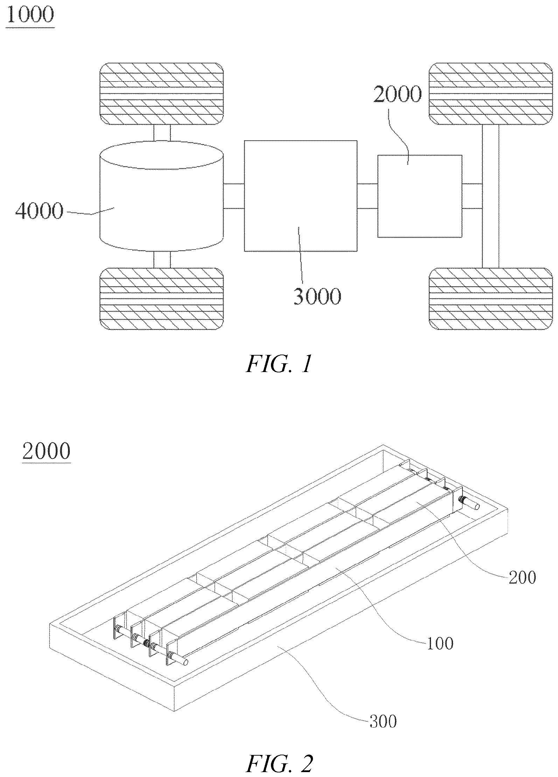

FIG. 1 is a schematic structural diagram of a vehicle according to some embodiments of the present application. As shown in FIG. 1, a battery 2000 is provided inside the vehicle 1000, and the battery 2000 may be arranged at a bottom, a head or a tail of the vehicle 1000. The battery 2000 may be configured to supply power to the vehicle 1000. For example, the battery 2000 may be used as a power supply for operating the vehicle 1000.

The vehicle 1000 may further comprise a controller 3000 and a motor 4000. The controller 3000 is configured to control the battery 2000 to supply power to the motor 4000, for example, to satisfy working power requirements during starting, navigation and traveling of the vehicle 1000.

In some embodiments of the present application, the battery 2000 may not only serve as a power supply for operating the vehicle 1000, but also serve as a power supply for driving the vehicle 1000, in place of or partially in place of fuel or natural gas, to provide driving power for the vehicle 1000.

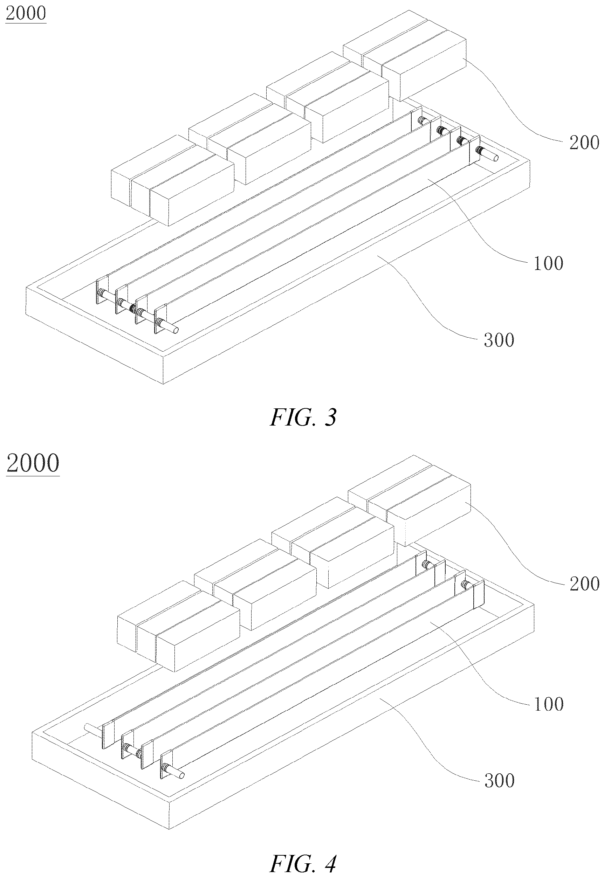

With reference to FIGS. 2 to 4, FIG. 2 is a schematic structural diagram of a battery according to some embodiments of the present application, FIG. 3 is an exploded view of the battery shown in FIG. 2, and FIG. 4 is an exploded view of a battery according to some other embodiments of the present application.

The battery 2000 according to the embodiments of the present application may comprise thermal management devices 100 and battery cells 200. The thermal management devices 100 and the battery cells 200 may be alternately arranged in sequence in a thickness direction Z. In addition, the battery 2000 may further comprise a housing 300 and an upper cover. The housing 300 is configured to receive and support the battery cells 200, and the housing 300 may have different structures. In some optional embodiments, the housing 300 and the upper cover may cover each other and jointly define a cavity for receiving the battery cells 200. The housing 300 is of a hollow structure with an open end, and the upper cover may be of a plate-like structure and covers an open side of the housing 300, to form a corresponding cavity for receiving the battery cells. Alternatively, the housing 300 and the upper cover each may be of a hollow structure with an open side, that is, an interface between the housing 300 and the upper cover is located in the middle of each battery cell 200. In this case, the open side of the upper cover covers the open side of the housing 300, to form a corresponding cavity for receiving the battery cells 200. Of course, the housing 300 and the upper cover may have various shapes, such as a cylinder and a cuboid.

To improve the sealing performance after the housing 300 is connected to the upper cover, a sealing member, such as a sealant and a sealing ring, may be further provided between the housing 300 and the upper cover.

Optionally, there may be a plurality of battery cells 200 in the battery 2000. If a plurality of battery cells 200 are provided, the plurality of battery cells 200 may be connected in series, in parallel, or in series-parallel. The series-parallel connection means that some of the plurality of battery cells 200 are connected in series and the rest are connected in parallel. The plurality of battery cells 200 may be directly connected in series or in parallel, or in series-parallel. Of course, it is also possible that the plurality of battery cells 200 are first connected in series or in parallel or in series-parallel to form a battery module, and a plurality of battery modules are then connected in series or in parallel or in series-parallel to form a whole and are received in the housing 300.

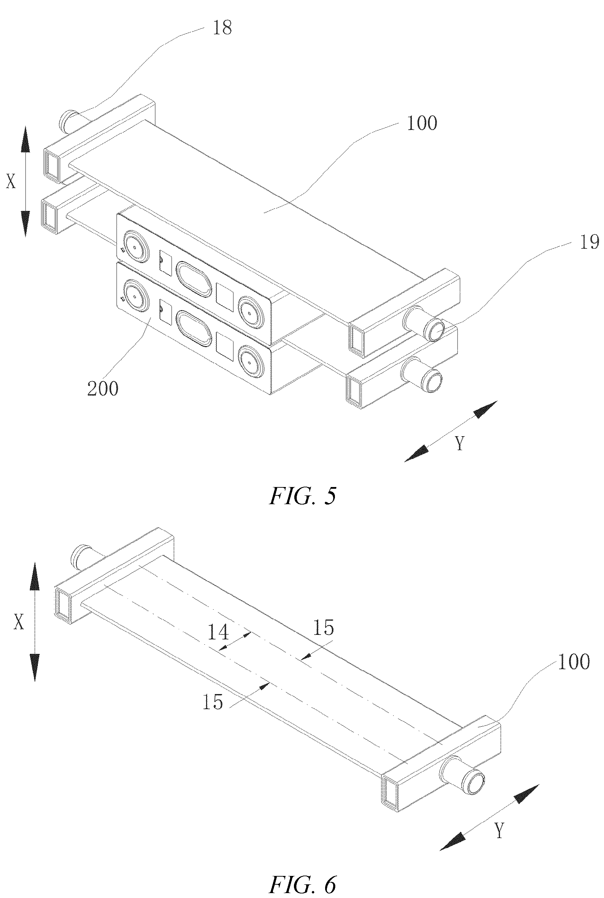

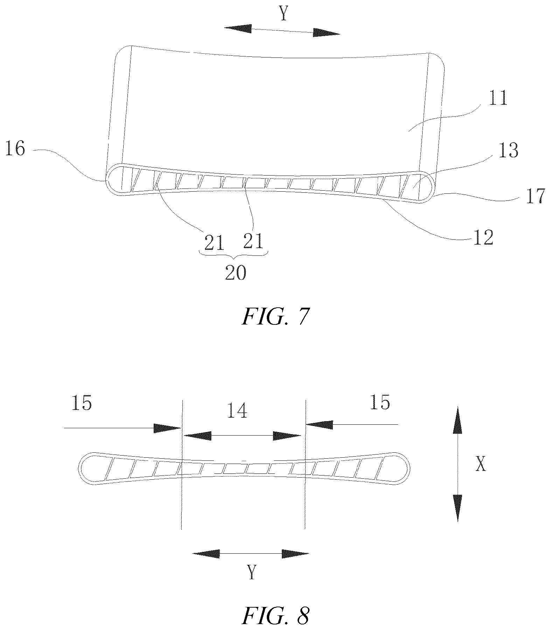

With reference to FIGS. 5 to 7, FIG. 5 is a diagram of a thermal management device according to some embodiments of the present application in a use state, FIG. 6 is a schematic structural diagram of a thermal management device according to some embodiments of the present application, and FIG. 7 is a partial structural diagram of a thermal management device according to some embodiments of the present application.

The present application provides a thermal management device 100. The thermal management device 100 comprises a heat exchange body 10. The heat exchange body 10 has a top wall 11 and a bottom wall 12 that are arranged opposite to each other in its own thickness direction X, and a receiving cavity 13 located between the top wall 11 and the bottom wall 12. The receiving cavity 13 is configured to receive a heat exchange medium. In the thickness direction X, one or each of the top wall 11 and the bottom wall 12 is recessed in a direction approaching the other to form a recessed cavity, and the recessed cavity is configured to provide an expansion space for a battery cell 200.

The thermal management device 100 according to the embodiments of the present application may be arranged adjacent to the battery cell 200, and the heat exchange efficiency is improved by causing the top wall 11 and/or the bottom wall 12 of the heat exchange body 10 that has a relatively large area to be in contact with a side surface of the battery cell 200 that has a relatively large area. In this case, one or each of the top wall 11 and the bottom wall 12 is recessed in a direction approaching the other, to form a recessed cavity recessed toward an interior of the heat exchange body 10 in the thickness direction X, thereby forming a surplus space that can absorb an expansion force of the battery cell 200. When the battery cell 200 expands and protrudes in the direction approaching the thermal management device 100 during operation, the expanded part may be embedded into the recessed cavity to avoid affecting the receiving cavity 13 inside the thermal management device 100. Furthermore, it is also possible to avoid that the thermal management device 100 cannot be compressed in the thickness direction X, resulting in damage to the battery cell 200 after expansion.

It can be understood that the recessed cavity in the embodiments of the present application may have different shapes according to different expansion situations of the battery cell 200, so as to have a larger contact area with the expanded surface of the battery cell 200, thereby improving the heat exchange efficiency. For example, the expansion degree of the battery cell 200 arranged adjacent to the thermal management device 100 may be first tested experimentally, relevant data of a corresponding relationship between the expansion degree and the position of the battery cell 200 is collected, and the shape and the position of the recessed cavity are designed accordingly, so that a recession degree of the recessed cavity is directly proportional to the expansion degree of the battery cell 200 at the corresponding position, thereby forming a good fit effect between the thermal management device 100 and the battery cell 200. After a squeezing force caused by expansion is absorbed, a balanced and stable stress state can be maintained, and a larger contact area can be achieved to provide a better heat exchange effect. Illustratively, the recessed cavity may be a rectangular recess, an arc-shaped recess, a stepped recess, etc., and may be designed according to use requirements and processing conditions, which is not specifically limited in the present application.

The heat exchange body 10 in the embodiments of the present application has the recessed cavity in the thickness direction X. Optionally, the volume of the recessed cavity may be less than or equal to the expanded volume of the battery cell 200 during operation, so that the battery cell 200 can abut against the bottom of the recessed cavity after the expansion, and thus there is a contact area exceeding a certain size between the battery cell 200 and the heat exchange body 10, thereby ensuring the heat exchange effect between the battery cell and the heat exchange body. Correspondingly, when the battery cell 200 is not expanded, the battery cell is at a relatively low temperature, and also has a relatively low requirement for heat exchange efficiency. In this case, there may be a certain gap between the battery cell 200 and the heat exchange body 10, and the battery cell 200 can operate normally. After the battery cell 200 generates heat and is expanded, the expanded volume is greater than or equal to the volume of the recessed cavity, so that the battery cell 200 can abut against the heat exchange body 10, thereby correspondingly improving the heat exchange efficiency and enabling the battery cell 200 to still operate normally within a certain temperature range.

Optionally, when the top wall 11 and the bottom wall 12 both have depressions, recessed cavities formed thereby may have the same shape and position, or different designs may be adopted according to different expansion situations of adjacent battery cells 200.

The thermal management device 100 according to the embodiments of the present application has the recessed cavity in its own thickness direction X, and the space provided by the recessed cavity can absorb expansion of a battery cell 200 to be cooled during use. This avoids the compression of the receiving cavity 13 inside the heat exchange body 10 due to the battery cell 200 squeezing the top wall 11 or the bottom wall 12 during the expansion, so that the thermal management device 100 less likely to be squeezed by the battery cell 200 which results in increased flow resistance, thereby ensuring parameters such as a flow rate of the heat exchange medium in the receiving cavity 13. Furthermore, after thermally expanding, the battery cell 200 enters the recessed cavity of the heat exchange body 10 to come into contact with the heat exchange body 10, and the battery cell 200 can thus relatively directly exchange heat with the heat exchange medium in the heat exchange body 10, thereby ensuring a heat exchange rate.

The thermal management device 100 according to the embodiments of the present application comprises the heat exchange body 10, and the heat exchange body 10 comprises the top wall 11, the bottom wall 12 and the receiving cavity 13. The receiving cavity 13 is filled with the heat exchange medium, and the heat exchange medium can exchange heat with the battery cell 200 through the contact with the top wall 11 and/or the bottom wall 12, so as to exchange and take away heat when the battery cell 200 generates heat during the operation, and achieve the effect of cooling the battery cell 200.

Specifically, the heat exchange body 10 in the embodiments of the present application has the receiving cavity 13, and when the thermal management device 100 is in use, the receiving cavity 13 may be filled with the heat exchange medium that can absorb heat. The heat exchange medium may be in the form of a cooling liquid, a cooling gas, and the like commonly used in the technical field of batteries. Optionally, the heat exchange medium in the receiving cavity 13 may be flowing, and a good cooling effect can be achieved by using the circulating heat exchange medium. When the heat exchange medium in the thermal management device 100 circularly flows for cooling, a flow direction of the heat exchange medium may be the same as an extension direction of the heat exchange body 10 itself, so as to be in full contact with the battery cell 200 to be cooled, and optimize the heat exchange efficiency.

In some optional embodiments, in the thickness direction X, one or each of the top wall 11 and the bottom wall 12 is an arc-shaped plate recessed approaching the other.

In the embodiments of the present application, one or each of the top wall 11 and the bottom wall 12 of the heat exchange body 10 is recessed in the direction approaching the other to form a recessed cavity. The recessed cavity may be a recessed cavity with an arc-shaped bottom surface, that is, at least one of the top wall 11 and the bottom wall 12 has an arc-shaped surface. The arc-shaped surface may occupy at least a partial region of the top wall 1 1/bottom wall 12, that is, at least a partial region of the top wall 1 1/bottom wall 12 is an arc-shaped plate. When only the partial region is an arc-shaped plate, this partial region may extend in the same direction as the extension direction of the heat exchange body 10 itself and be distributed in a rectangular shape, and may be symmetrically arranged with a central axis of the heat exchange body 10 in the first direction Y as an axis of symmetry, so as to form a structure with a relatively uniform bearing capacity in this direction. The form of the arc-shaped plate enables the thermal management device 100 to be more easily attached to a surface of the battery cell 200 to be cooled, thereby providing a better heat exchange effect.

In some optional embodiments, in the thickness direction X, the top wall 11 and the bottom wall 12 are respectively arc-shaped plates recessed in directions approaching each other.

As mentioned above, in the embodiments of the present application, a recessed cavity for avoiding the expansion of the battery cell 200 may be formed by configuring the top wall 11 and the bottom wall 12 as arc-shaped plates. Configuring the top wall 11 and the bottom wall 12 as arc-shaped plates enables the heat exchange body 10 to absorb the expansion on two sides, so that the thermal management device 100 may be arranged between two adjacent battery cells 200 to provide a heat exchange effect for the battery cells 200 on the two sides, and thus the finally formed battery can have a compact structure and good heat dissipation.

In some optional embodiments, in the thickness direction X, the top wall 11 and the bottom wall 12 are spaced apart from each other and symmetrically distributed.

In an embodiment where the top wall 11 and the bottom wall 12 are both recessed in directions approaching each other, the top wall 11 and the bottom wall 12 may be spaced apart from each other and symmetrically arranged in the thickness direction X. In this case, the receiving cavity 13 of the heat exchange body 10 is a cavity symmetrical with respect to a medial plane in the thickness direction X. Symmetrically arranging the top wall 11 and the bottom wall 12 spaced apart from each other enables the entire heat exchange body 10 to be uniformly stressed and facilitates processing.

Referring to FIG. 8, FIG. 8 is a sectional view of a thermal management device according to some embodiments of the present application. In some optional embodiments, in a first direction Y, the heat exchange body 10 has a first region 14 and a second region 15, a distance between the top wall 11 and the bottom wall 12 in the first region 14 in the thickness direction X is less than that in the second regions 15 in the thickness direction X, and the first direction Y intersects with the thickness direction X.

The heat exchange body 10 in the embodiments of the present application has the top wall 11 and the bottom wall 12 that are arranged opposite each other in the thickness direction X, and one or each of the two cavity walls is recessed in the direction approaching the other. Therefore, the heat exchange body 10 in the embodiments of the present application may extend in the thickness direction X to different extents, thereby forming a receiving cavity 13 with different thicknesses. In this case, at least two regions with different thicknesses may be arranged in the first direction Y, and a relatively thin region is arranged corresponding to a region where the battery cell 200 is significantly expanded. Thicknesses at different positions can be adjusted accordingly by adjusting the recession degree and recession position of the top wall 11 and/or the bottom wall 12, to achieve a required design effect.

In some optional embodiments, second regions 15 are respectively provided on two sides of the first region 14 in the first direction Y.

The heat exchange body 10 in the embodiments of the present application may have a plurality of second regions 15, and the plurality of second regions 15 may be respectively arranged on two sides of the first region 14 in the first direction Y. In this case, the first region 14 is arranged corresponding to a position where the battery cell 200 has a large expansion degree, so as to avoid an expanded protruding part of the battery cell 200 by means of a relatively deep recessed cavity, and the second regions 15 may have a larger thickness so as to receive more heat exchange media and provide a better cooling effect.

Illustratively, the thermal management device 100 according to the embodiments of the present application may also have a plurality of first regions 14, and these first regions 14 may be spaced apart from each other in the first direction Y. When thermal management devices 100 extend to some extent in the first direction Y, each of the thermal management devices 100 may be correspondingly provided with a plurality of battery cells 200 in this direction. In this case, at least one first region 14 with a relatively small thickness may be provided corresponding to each battery cell 200, and a second region 15 with a relatively large thickness may be provided between adjacent first regions 14. Alternatively, each first region 14 may be provided corresponding to a plurality of battery cells 200, that is, expansion allowances of the plurality of battery cells 200 are received at the same time. A method for specific corresponding arrangement between the first region 14 and the battery cells 200 may be designed according to the extension extent and expansion degree of the battery cells 200 in the first direction Y, which is not specifically limited in the present application.

In some optional embodiments, in the first direction Y, the distance between the top wall 11 and the bottom wall 12 in the thickness direction X first decreases and then increases.

The heat exchange body 10 in the embodiments of the present application may have, in the first direction Y, a middle relatively thin first region 14 and relatively thick second regions 15 arranged on two sides of the first region 14, so that the distance between the top wall 11 and the bottom wall 12 in the thickness direction X has a trend of first decreasing and then increasing, so as to facilitate matching the expansion of each battery cell 200 in one-to-one correspondence, better absorb the expansion and perform heat exchange.

In some optional embodiments, the heat exchange body 10 further comprises a first side wall 16 and a second side wall 17 that are arranged opposite to each other in the first direction Y, the first side wall 16 is connected to the top wall 11 and the bottom wall 12, the second side wall 17 is connected to the top wall 11 and the bottom wall 12, and in the first direction Y, one or each of the first side wall 16 and the second side wall 17 is recessed in a direction away from the other.

The receiving cavity 13 of the heat exchange body 10 in the embodiments of the present application may be enclosed by a cavity wall composed of the top wall 11, the first side wall 16, the bottom wall 12 and the second side wall 17 that are connected end to end in sequence. One or each of the first side wall 16 and the second side wall 17 that is recessed in a direction away from the other can increase a cross-sectional area of the receiving cavity 13, thereby improving the heat exchange efficiency.

It can be understood that, similar to the top wall 11 and the bottom wall 12, depressions of the first side wall 16 and the second side wall 17 may also be of various structures such as rectangular depressions, arc-shaped depressions, and stepped depressions, and depressions with different shapes may be respectively adopted for the two side walls.

In some optional embodiments, in the first direction Y, the first side wall 16 and the second side wall 17 are respectively arc-shaped plates that are recessed in directions away from each other.

Similar to the arrangement of the top wall 11 and the bottom wall 12, the first side wall 16 and the second side wall 17 in the embodiments of the present application may be both configured as arc-shaped plates, and the two arc-shaped plates are recessed in directions away from each other to form arc-shaped side walls of the receiving cavity 13. Configuring both the first side wall 16 and the second side wall 17 as the arc-shaped plates recessed in directions away from each other can further enlarge the cross-sectional area of the receiving cavity 13 with the heat exchange body 10 having the unchanged thickness, increase the flow rate and capacity of the heat exchange medium, and further improve the heat exchange effect.

In some optional embodiments, in the first direction Y, the heat exchange body 10 is of an axisymmetric structure.

The heat exchange body 10 in the embodiments of the present application may be of a symmetrical structure, that is, the top wall 11 and the bottom wall 12 are symmetrically arranged, and the first side wall 16 and the second side wall 17 are symmetrically arranged to form a uniform symmetrical structure. In this case, the heat exchange body 10 can form a uniform stress structure and facilitate processing. In addition, when the heat exchange body 10 is of an axisymmetric structure, an axisymmetric receiving cavity 13 can also be formed accordingly, so that the internal heat exchange medium flows more uniformly.

As shown in FIG. 7, in some optional embodiments, the thermal management device 100 further comprises a support component 20, and the support component 20 is arranged in the receiving cavity 13 and is configured to support at least one of the top wall 11 and the bottom wall 12.

A support component 20 may be arranged in the receiving cavity 13 of the thermal management device 100 according to the embodiments of the present application, and the support component 20 may be connected to at least one of the top wall 11 and the bottom wall 12 and is configured to form a support structure between the top wall 11 and the bottom wall 12. The support component 20 in the embodiments of the present application may be in a structural form such as a plurality of spaced support columns or support plates, provided that it is ensured that the heat exchange medium can flow smoothly in the receiving cavity 13. The support component 20 in the embodiments of the present application can provide a support force, so that a certain distance is maintained between the top wall 11 and the bottom wall 12, thereby facilitating circulation of the heat exchange medium.

In some optional embodiments, the support component 20 comprises a plurality of support units 21, the plurality of support units 21 are distributed spaced apart from each other and separate the receiving cavity 13 to form a plurality of flow channels, and each of the support units 21 is connected to at least one of the top wall 11 and the bottom wall 12.

The support units 21 in the embodiments of the present application may be support plates, the receiving cavity 13 is divided into a plurality of parts by the support units 21, and flow channels for the heat exchange medium to pass through are formed between adjacent support plates. The support force provided by the support unit 21 can provide a support force for the flow channels after the thermal management device 100 is subjected to a squeezing stress in the thickness direction X, thereby solving the problem of increased flow resistance after squeezing.

It can be understood that channels formed between adjacent support units 21 should be in the same direction as a flow direction of the heat exchange medium inside the receiving cavity 13, so as to form flow channels for the heat exchange medium to pass through, so that the thermal management device 100 internally has lower flow resistance, thereby further improving the cooling efficiency.

In some optional embodiments, the plurality of support units 21 are spaced apart from each other and arranged in parallel.

The support units 21 in the embodiments of the present application may be arranged in parallel, so as to form smooth flow channels with relatively small flow resistance and improve fluidity of the heat exchange medium between the plurality of support units 21, thereby ensuring that the thermal management device 100 has a good heat exchange effect. Furthermore, the support units 21 arranged in parallel can provide a uniform support force between the top wall 11 and the bottom wall 12, so that the heat exchange body 10 has a uniform and reliable bearing capacity in the thickness direction X, and the parallel arrangement of the support units 21 facilitates the processing thereof.

It can be understood that the plurality of support units 21 may all extend in a length direction of the heat exchange body 10 itself, and the plurality of support units 21 may extend in various shapes such as parallel straight lines, a wave shape, and a folded line shape, provided that it is ensured that the heat exchange medium can pass smoothly, which is not specifically limited in the present application.

In some optional embodiments, the support units 21 each are of a plate-like structure, and an included angle between at least one of the support units 21 and at least one of the top wall 11 and the bottom wall 12 is less than 90°.

The support units 21 in the embodiments of the present application each may be obliquely arranged, that is, an included angle of less than 90° is formed between the support unit and at least one of the top wall 11 and the bottom wall 12, so that supporting strength of the thermal management device 100 can be less than a certain threshold when the thermal management device is subjected to a squeezing stress in the thickness direction X. That is, when the heat exchange body 10 is subjected to a squeezing force in the thickness direction X applied by the expansion of the battery cell 200, the support unit 21 can be compressed and deformed, so that the thickness of the heat exchange body 10 at this position is reduced, and the expansion generated by the battery cell 200 is further avoided, thereby preventing damage to the battery cell 200.

It can be understood that in some embodiments where the top wall 11 and/or the bottom wall 12 are/is an arc-shaped plate(s), the included angle may refer to an included angle between a plane where edges of the arc-shaped plate on two sides in the first direction Y are located and the support unit 21.

In some optional embodiments, an included angle between each of the support units 21 and the top wall 11 is in a value range of 30°-60°; and/or an included angle between each of the support units 21 and the bottom wall 12 is in a value range of 30°-60°.

As mentioned above, in the embodiment where the included angle between each of the support units 21 and the top wall 11 and the bottom wall 12 is less than 90°, that is, in the embodiment where the support units 21 each are obliquely arranged, the included angle between each of the support units 21 and the top wall 11 and the bottom wall 12 may be kept between 30° and 60°, so that the support unit 21 maintains a certain extension distance in the thickness direction X, and can shrink and deform when being subjected to a force in this direction, to absorb the squeezing stress caused by expansion, thereby further avoiding an expansion region of the battery cell 200.

In some optional embodiments, every adjacent two support units 21 of the plurality of support units 21 have the same distance.

The support units 21 in the embodiments of the present application may be equally spaced apart from each other, so as to provide uniform and stable support for the top wall 11 and the bottom wall 12 having recessed cavities, so that the entire thermal management device 100 has a relatively uniform and reliable bearing capacity when squeezed by the expansion of the battery cell 200.

In some optional embodiments, the heat exchange body 10 and the support component 20 are of an integral structure.

The heat exchange body 10 in the embodiments of the present application has the receiving cavity 13, and the support component 20 for providing a support function is further arranged in the receiving cavity 13. In the embodiment where the support component 20 is connected to the top wall 11 and/or the bottom wall 12, the support component 20 may be integrally formed with the heat exchange body 10, so that the overall production efficiency of the thermal management device 100 can be improved, and the overall strength of the thermal management device 100 can be improved.

In some optional embodiments, the heat exchange body 10 has an inlet 18 and an outlet 19, and the inlet 18 and the outlet 19 are respectively in communication with the receiving cavity 13.

The heat exchange body 10 in the embodiments of the present application may have the inlet 18 and the outlet 19 respectively in communication with the receiving cavity 13, and the inlet 18 and the outlet 19 may be respectively arranged at two ends of the heat exchange body 10 in its own length direction. The thermal management device 100 according to the embodiments of the present application can achieve a cooling function by filling the interior of the receiving cavity 13 formed between the top wall 11 and the bottom wall 12 with a flowing heat exchange medium, so that the inlet 18 and the outlet 19 may be respectively arranged at two ends of the heat exchange body 10 in its own length direction, and the heat exchange medium is inputted from the inlet 18 and outputted from the outlet 19, such that the heat exchange medium flows between the inlet 18 and the outlet 19 along the aforementioned length, and the overall heat exchange efficiency between the thermal management device 100 and the battery cell 200 is improved.

As shown in FIGS. 7 and 8, an embodiment of the present application provides a thermal management device 100, comprising a heat exchange body 10 and a support component 20. The heat exchange body 10 has a top wall 11 and a bottom wall 12 that are arranged opposite each other in its own thickness direction, and a first side wall 16 and a second side wall 17 connected between the top wall and the bottom wall. The top wall 11, the bottom wall 12, the first side wall 16 and the second side wall 17 jointly enclose a receiving cavity 13, and the support component 20 is arranged in the receiving cavity 13. The top wall 11 and the bottom wall 12 in the embodiment of the present application are both arc-shaped plates recessed in directions approaching each other, and the first side wall 16 and the second side wall 17 are arc-shaped plates recessed in directions away from each other. The thickness of the heat exchange body 10 first decreases and then increases in the first direction Y, and the entire heat exchange body is axisymmetrically arranged. The support component 20 comprises a plurality of support units 21 equally spaced apart from each other and arranged in parallel, and an included angle between each of the support units 21 and each of the top wall 11 and the bottom wall 12 is 30°-60°.

In a second aspect, the present application provides a battery 2000, comprising: a plurality of battery cells 200 and a thermal management device 100 according to any one of the embodiments of the first aspect. At least a part of the thermal management device 100 is located between adjacent battery cells 200 and is configured to exchange heat with the battery cells 200, and the recessed cavity is configured to provide an expansion space for the battery cells 200.

In the battery 2000 according to the embodiments of the present application, a plurality of battery cells 200 and a plurality of thermal management devices 100 may be alternately arranged, the thermal management devices 100 and the battery cells 200 may be alternately arranged in the thickness direction X, and the battery cells 200 are cooled by the thermal management devices 100 arranged on side surfaces of the battery cells 200.

In a third aspect, an embodiment of the present application provides a power consuming device, comprising a battery 2000 in the second aspect.

The battery 2000 and the power consuming device according to the embodiment of the present application have all the beneficial effects of the thermal management device 100 in the first aspect. For details, reference may be made to the specific descriptions of the thermal management device 100 in the above embodiments, and the details are not described herein again in this embodiment.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A thermal management device for exchanging heat with a battery cell, the thermal management device comprising:
a heat exchange body comprising a top wall and a bottom wall that are arranged opposite each other in its own thickness direction, and a receiving cavity located between the top wall and the bottom wall, the receiving cavity being configured to receive a heat exchange medium, so as to exchange heat with the battery cell,
wherein in the thickness direction, one or each of the top wall and the bottom wall is recessed in a direction approaching the other to form a recessed cavity, and the recessed cavity is configured to provide an expansion space for the battery cell.

2. The thermal management device according to claim 1, wherein in the thickness direction, one or each of the top wall and the bottom wall is an arc-shaped plate recessed in the direction approaching the other.

3. The thermal management device according to claim 2, wherein in the thickness direction, the top wall and the bottom wall are respectively arc-shaped plates recessed in directions approaching each other.

4. The thermal management device according to claim 2, wherein in the thickness direction, the top wall and the bottom wall are spaced apart from each other and symmetrically distributed.

5. The thermal management device according to any one of claims 1 to 4, wherein in a first direction, the heat exchange body has a first region and a second region, a distance between the top wall and the bottom wall in the first region in the thickness direction is less than that in the second region in the thickness direction, and the first direction intersects with the thickness direction.

6. The thermal management device according to claim 5, wherein second regions are respectively provided on two sides of the first region in the first direction.

7. The thermal management device according to claim 5, wherein in the first direction, the distance between the top wall and the bottom wall in the thickness direction first decreases and then increases.

8. The thermal management device according to any one of claims 5 to 7, wherein the heat exchange body further comprises a first side wall and a second side wall that are arranged opposite to each other in the first direction, the first side wall is connected to the top wall and the bottom wall, the second side wall is connected to the top wall and the bottom wall, and in the first direction, one or each of the first side wall and the second side wall is recessed in a direction away from the other.

9. The thermal management device according to claim 8, wherein in the first direction, the first side wall and the second side wall are respectively arc-shaped plates recessed in directions away from each other.

10. The thermal management device according to any one of claims 5 to 9, wherein in the first direction, the heat exchange body is of an axisymmetric structure.

11. The thermal management device according to any one of claims 1 to 10, wherein the thermal management device further comprises a support component, and the support component is arranged in the receiving cavity and is configured to support at least one of the top wall and the bottom wall.

12. The thermal management device according to claim 11, wherein the support component comprises a plurality of support units, the plurality of support units are distributed spaced apart from each other and separate the receiving cavity to form a plurality of flow channels, and each of the support units is connected to at least one of the top wall and the bottom wall.

13. The thermal management device according to claim 12, wherein the plurality of support units are arranged in parallel.

14. The thermal management device according to claim 12, wherein the support units each are of a plate-like structure, and an included angle between at least one of the support units and at least one of the top wall and the bottom wall is less than 90°.

15. The thermal management device according to claim 14, wherein an included angle between each of the support units and the top wall ranges from 30° to 60°;
and/or an intersection angle between each of the support units and the bottom wall is in a value range of 30°-60°.

16. The thermal management device according to claim 12, wherein every adjacent two of the plurality of support units have the same distance in the first direction, and the first direction intersects with the thickness direction.

17. The thermal management device according to any one of claims 11 to 16, wherein the heat exchange body and the support component are of an integral structure.

18. A battery, comprising:
a plurality of battery cells; and
a thermal management device of any one of claims 1 to 17, wherein at least a part of the thermal management device is located between adjacent battery cells and is configured to exchange heat with the battery cells, and the recessed cavity is configured to provide an expansion space for the battery cells.

19. A power consuming device, comprising a battery of claim 18, the battery being configured to supply electric energy.
